# EUROPÄISCHE PATENTANMELDUNG

(11) **EP 2 228 622 A2**
(43) Veröffentlichungstag der Anmeldung: **15.09.2010**
(21) Anmeldenummer: 10002638.4
(22) Anmeldetag: 12.03.2010
(51) Int. Cl.: G01B 11/02

(54) **Verfahren und Vorrichtung zum Messen der Lage der Kante einer Materialbahn**

(30) Priorität: 13.03.2009 DE 102009012997
(71) Anmelder: BST International GmbH, 33739 Bielefeld (DE)
(72) Erfinder: Klatte, Thomas, 32108 Bad Salzuflen (DE); Nacke, Theodor, 33818 Leopoldshöhe (DE); Wiebe, Michael, 33818 Leopoldshöhe (DE)
(74) Vertreter: Klingseisen, Franz

(57) **Zusammenfassung**

Die Erfindung betrifft ein Verfahren zum Messen der Lage der Kante eines Objektes, insbesondere einer Materialbahn (M), umfassend Bestrahlen des Randbereichs des Objektes bzw. der Materialbahn (M) durch zwei nebeneinander angeordnete Sender (1, 2), die auf einer Linie quer zur Kante der Materialbahn liegen und Ermitteln des Schattenwurfs (S1, S2) der Kante der Materialbahn (M) auf einem Sensor (3), der sich unter dieser quer zur Kante der Materialbahn erstreckt, wobei aus dem durch den Sender (1) erzeugten Schattenwurf (S1) und dem vom Sender (2) erzeugten Schattenwurf (S2) die Lage der Kante der Materialbahn ermittelt wird.

## Beschreibung

Die Erfindung betrifft ein Verfahren und eine Vorrichtung zum Messen der Lage der Kante eines Objektes, insbesondere einer stationären oder einer laufenden Materialbahn, wie z. B. einer von einer Druckmaschine laufend bedruckten Papierbahn.

Es ist bekannt, zum Messen der Lage der Kante einer laufenden Materialbahn eine Beleuchtungseinrichtung mit Sensor zu verwenden, wobei eine Optik mit Linsen zum Abbilden der Kante verwendet wird. Dabei kann die Beleuchtungseinrichtung mit Optik und Sensor in einem gewissen Abstand von der Kante der Materialbahn positioniert werden. Allerdings ist ein gewisser Aufwand für eine solche Messeinrichtung erforderlich.

Aufgabe der vorliegenden Erfindung ist es, eine kostengünstige Messvorrichtung vorzusehen.

Diese Aufgabe wird erfindungsgemäß dadurch gelöst, dass ausgehend von zwei nebeneinander angeordneten Lichtquellen der Schattenwurf der Kante der Materialbahn festgestellt und daraus die Lage der Kante der Materialbahn ermittelt wird. Hierdurch ist es möglich, kostengünstige Sensoren für die Erfassung der Position des Schattenwurfs einzusetzen, wie sie beispielsweise bei Scannern benutzt werden, sodass insgesamt eine kostengünstige Messvorrichtung möglich ist.

Vorzugsweise werden Kontakt-Bild-Sensoren (CIS, Contact Image Sensor) in einer Reihenanordnung quer zu der zu messenden Kante der Materialbahn angeordnet, wobei zwei nebeneinander liegende Bildpunkte für die Messung der Lage der Kante verwendet werden.

Die bei Scannern verwendeten Sensoren sind sehr kostengünstig, sind aber mit dem Nachteil sehr geringer Schärfentiefe behaftet, weil sie zur Bilderfassung nahezu direkten Kontakt mit der Vorlage benötigen. Bei den handelsüblichen CIS Sensoren sind kleine Linsen (Selfoc) vor der eigentlichen empfindlichen CMOS Fläche montiert. Diese haben aber nur eine Tiefenschärfe von ca. 2mm. Für das erfindungsgemäße Verfahren werden diese Linsen entfernt, so dass auf dem Empfangselement keinerlei Optik vorhanden ist. Für die Feststellung des Schattenwurfs ergeben sie dabei zuverlässige Signale, auch wenn die Sensoren nicht nahezu in Kontakt mit der Materialbahn, sondern in einem Abstand von dieser angeordnet sind. Der Vorteil eines erfindungsgemäßen Aufbaus nach den Ansprüchen 1 und 3 liegt darin, dass keine Optik für die Bilderfassung erforderlich ist.

Das Verfahren ist nicht auf die Verwendung von CIS Sensoren beschränkt, es können auch übliche CCD Sensoren verwendet werden, wobei vor dem Empfangselement keine Optik vorgesehen ist.

Die Erfindung wird beispielsweise anhand der Zeichnung näher erläutert. Es zeigen
- Fig. 1: schematisch eine Messanordnung,
- Fig. 2: den Signalausgang am Sensor in Fig. 1,
- Fig. 3: schematisch die Messanordnung mit einer dickeren Materialbahn,
- Fig. 4: einen schematischen Querschnitt durch einen Sensoraufbau, und
- Fig. 5: die Anordnung einer Reihe von Sendern über einer Materialbahn,

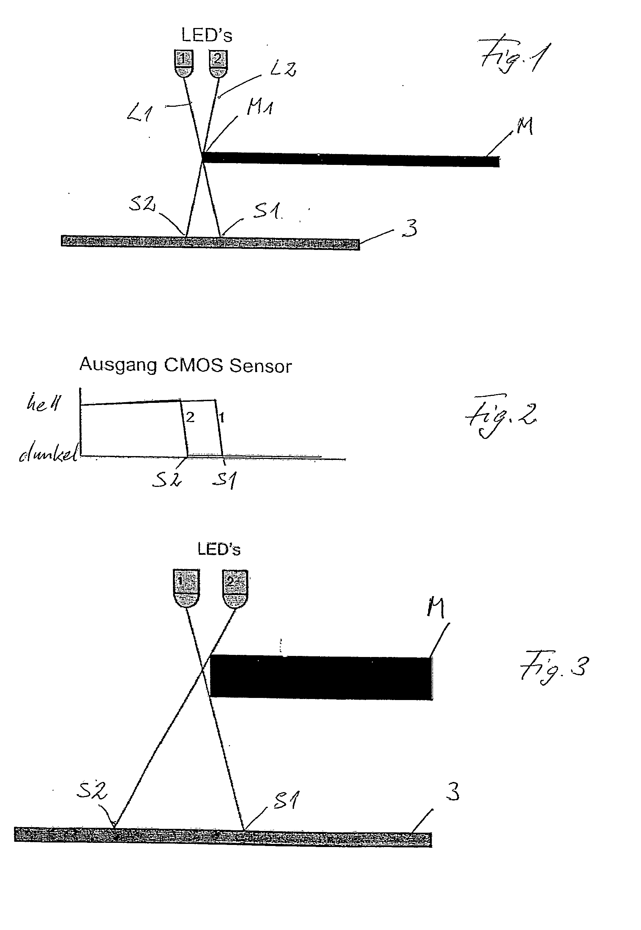

In Fig. 1 ist mit M im Querschnitt eine laufende Materialbahn schematisch wiedergegeben, über deren Kante zwei Sender 1 und 2 in der Form von LED's in einem geringen Abstand voneinander quer zur Längsrichtung der Kante M1 angeordnet sind. Unter der Materialbahn ist ein sich quer zur Kante erstreckender, streifenförmiger Sensor 3 angeordnet, der den von den Sendern 1 und 2 erzeugten Schattenwurf der Kante M1 bei S1 und S2 aufnimmt. Fig. 2 zeigt die vom Sensor 3 ausgegebenen Signale in Form einer elektrischen Spannung, wobei die Linie 1 dem von der LED 1 abgegebenen Licht und die Linie 2 dem von der LED 2 auf dem Sensor 3 auffallenden Licht wiedergibt. Der Schattenwurf der Materialbahn M auf dem Sensor 3 ist durch Abfall der Ausgangsspannung auf das Niveau 0 wiedergegeben.

Durch den bekannten Abstand der Sender 1 und 2 voneinander und den Abstand zwischen den Sendern bzw. LEDs und dem Empfangselement erhält man durch den Schattenwurf der Materialbahn M auf dem Sensor 3 als Messergebnis sowohl die Lage der Kante M1 beispielsweise in der Mitte des Signalabfalls S1 und S2 in Fig. 2 als auch die Höhenlage der Materialbahn M durch den Abstand der Signalflanken voneinander entsprechend dem Abstand der Ränder des Schattenwurfs bei S1 und S2.

Mit dem erfindungsgemäßen Verfahren kann entweder bei bekannter Dicke der Materialbahn die Höhenlage der Bahn bestimmt werden, oder bei bekannter Höhenlage der Bahn deren Dicke bestimmt werden

Durch eine nicht dargestellte Recheneinrichtung werden die vom Sensor 3 bei S1 und S2 abgegebenen Signale für die Messung der Lage der Kante der Materialbahn M in horizontaler Richtung und für die Messung der Höhenlage bzw. Materialdicke in vertikaler Richtung verarbeitet, wobei von der Recheneinrichtung auch die Sender bzw. LED's 1 und 2 aktiviert bzw. angesteuert werden können.

Der Sensor 3 besteht vorzugsweise aus einem CMOS-Sensor mit einer Länge von 214 mm und 2584 Pixel, sodass sich 12 Pixel/mm (300 DPI) ergeben. Die Datenrate bei einem solchen Sensor liegt bei 2,5 Mhz und einer Scanfrequenz von 1,25 ms. Der CMOS-Sensor besteht aus einer Sensorplatine eines CIS-Moduls. Eine solche Platine kann sehr leicht demontiert werden.

Der durch die Länge des Sensors von 214 mm vorgegebene Messbereich kann auch größer ausgebildet und beispielsweise auf 800 mm verlängert werden.

Für die Kantenerfassung werden vorzugsweise wenigstens zwei Scanvorgänge vorgenommen, wenn die Kantenlage bereits erfasst wurde. Für den zuvor erwähnten CMOS-Sensor 3 ergibt sich dabei eine Zykluszeit von 2,5 ms.

Damit bei einer dickeren Materialbahn M keine Verfälschung des Messergebnisses durch die Materialdicke auftritt, werden die Sender bzw. LED's 1 und 2 so positioniert bzw. aus einer Reihe von LED's so aktiviert, dass der Lichteinfall der LED 1 schräg auf den Rand der Materialbahn M fällt, wodurch die untere Kante den Schattenwurf bei S1 begrenzt, während bei dem schrägen Lichteinfall von der LED 2 die obere Kante der Materialbahn M den Schattenwurf bei S2 bestimmt. Hierbei wird die LED 1 in Fig. 3 links und die LED 2 rechts vom Rand der Materialbahn M positioniert. Wie Fig. 3 zeigt, wird dadurch der Schattenwurf bei S1 und S2 am Sensor 3 jeweils durch die obere und untere Kante am Rand der Materialbahn M gebildet, sodass bei bekannter Dicke der Materialbahn M deren Einfluss auf den Schattenwurf rechnerisch kompensiert werden kann.

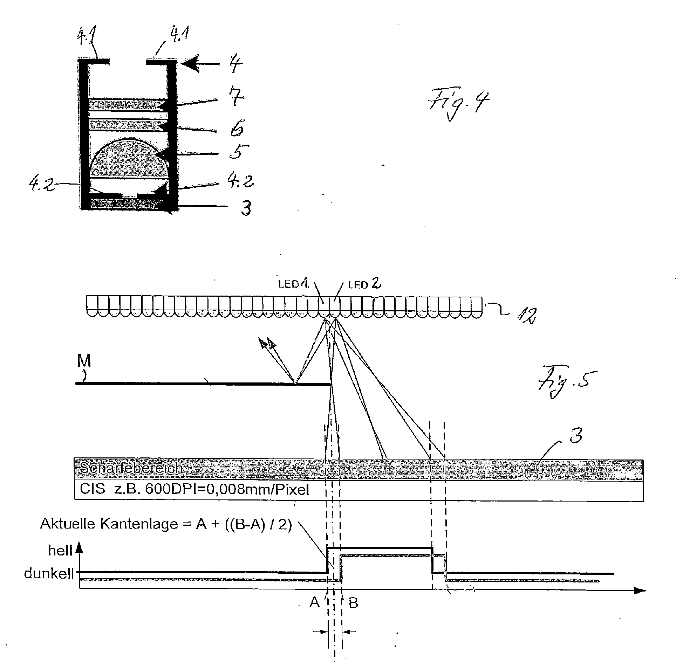

Fig. 4 gibt im Querschnitt einen bevorzugten Aufbau am Sensor 3 wieder. In einem im Querschnitt etwa U-förmigen Gehäuse 4 sind an den freien Schenkelenden nach innen abgewinkelte Ansätze 4.1 vorgesehen, die den für den Lichteinfall vorhandenen Zwischenraum begrenzen und eine Lichtfalle bilden. Am Boden des U-förmigen Gehäuses 4 ist der CMOS-Sensor 3 angeordnet, der längs der beiden Ränder jeweils durch eine Abdeckung 4.2 abgedeckt ist, sodass der Abstand der beiden Abdeckungen 4.2 voneinander ebenfalls eine Lichtfalle ergibt. Zwischen der Lichtfalle an der Oberseite des Gehäuses 4 und am Sensor 3 ist eine Linse in Form eines Halbrundstabs 5 zum Fokussieren des einfallenden Lichts auf den Zwischenraum zwischen den beiden Abdeckungen 4.2 vorgesehen. Vor dem Stab 5 kann eine Folie 6 zur Unterdrückung des Lichteinfalls von links und rechts und ein Graufilter 7 vorgesehen sein. Durch den Halbrundstab 5 wird der Lichtstrahl von den LEDs auf die Sensorfläche gebündelt und er lenkt Fremdlicht ab. Auch die Abdeckungen 4.1 und 4.2 unterdrücken Licht von links und rechts, insbesondere wenn die Anordnung eines Halbrundstabes 5 nicht ausreichen sollte. Durch den Aufbau der Fig. 4 wird die Fremdlichtunterdrückung insgesamt verbessert.

Fig. 5 zeigt schematisch eine Ansicht einer Reihe 12 von Sendern bzw. LED's quer über dem Rand einer Materialbahn M mit der Wiedergabe der von den beiden aktivierten Sendern 1 und 2 ausgehenden Lichtstrahlen und dem sich daraus ergebenden Signal hell/dunkel am Sensor 3, der mit einem CIS-Modul von z. B. 600 Dpi = 0,008 mm/Pixel ausgebildet ist. Der Abstand A von B am Sensor 3 ist ein Maß für die Position der Bahnkante zwischen Sender 1, 2 und Empfänger 3. Wenn sich die Materialbahn M bei gleicher Anordnung von Sender und Empfänger näher am Sensor 3 befindet, wird der Abstand A von B kleiner, wodurch die Höhenlage der Bahn M aus dem Abstand A-B ermittelt werden kann.

Mit Schärfebereich ist in Fig. 5 der Sensorbereich angegeben, auf dem Hell-Dunkel-Signale abgegeben werden können.

## Patentansprüche

1. Verfahren zum Messen der Lage der Kante eines Objektes, insbesondere einer Materialbahn (M), umfassend
Bestrahlen des Randbereichs des Objektes bzw. der Materialbahn (M) durch zwei nebeneinander angeordnete Sender (1, 2), die auf einer Linie quer zur Kante der Materialbahn liegen, und
Ermitteln des Schattenwurfs (S1, S2) der Kante der Materialbahn (M) auf einem Sensor (3), der sich unter dieser quer zur Kante der Materialbahn erstreckt,
wobei aus dem durch den Sender (1) erzeugten Schattenwurf (S1) und dem vom Sender (2) erzeugten Schattenwurf (S2) die Lage der Kante der Materialbahn ermittelt wird.

2. Verfahren nach Anspruch 1, wobei bei vorgegebenem Abstand von Sender (1, 2) und Empfänger (3) und der Materialbahndicke durch den Abstand der Schattenwurfbegrenzungen (S1, S2) voneinander die Höhenlage der Materialbahn (M) ermittelt wird.

3. Vorrichtung zum Messen der Lage der Kante eines Objektes, insbesondere einer Materialbahn (M), umfassend
wenigstens zwei Sender (1, 2), die auf einer Linie quer zur Kante des Objektes bzw. der Materialbahn (M) angeordnet sind, und
einen Empfänger bzw. Sensor (3), der sich quer zur Kante der Materialbahn erstreckt und den durch die Bestrahlung durch die Sender sich ergebenden unterschiedlichen Schattenwurf feststellt, und
durch eine Recheneinrichtung, welche aus dem Abstand der Begrenzung der unterschiedlichen Schattenwürfe die Lage der Kante der Materialbahn ermittelt.

4. Vorrichtung nach Anspruch 3, wobei eine Reihe von Sendern (1, 2) quer zur Kante der Materialbahn angeordnet ist, von der jeweils nur zwei Sender für die Messung aktiviert werden.

5. Vorrichtung nach Anspruch 3 oder 4, wobei die Sender als Leuchtdioden (1,2) ausgebildet sind.

6. Vorrichtung nach einem der Ansprüche 3 bis 5, wobei der Sensor (3) als CCD-Sensor oder als streifenförmiger CMOS-Sensor bzw. als Kontakt-Bild-Sensor ausgebildet ist.

7. Vorrichtung nach einem der Ansprüche 3 bis 6, wobei über dem streifenförmigen Sensor (3) ein Halbrundstab (5) zum Fokussieren der einfallenden Lichtstrahlen auf den Sensor (3) angeordnet ist.

8. Vorrichtung nach einem der Ansprüche 3 bis 7, wobei der streifenförmige Sensor (3) in einem im Querschnitt U-förmigen Gehäuse (4) angeordnet ist, das wenigstens eine Lichtfalle durch Verengung des Öffnungsbereichs über dem Sensor (3) bildet.
